# EUROPÄISCHE PATENTSCHRIFT

(11) **EP 1 772 231 B1**
(45) Veröffentlichungstag und Bekanntmachung des Hinweises auf die Patenterteilung: **26.08.2009**
(21) Anmeldenummer: 06021016.8
(22) Anmeldetag: 06.10.2006
(51) Int. Cl.: B23Q 39/04, B23Q 1/62

(54) **Mehrspindeldrehmaschine mit einer Bearbeitungseinheit auf einem Kreuzschlitten**
Multispindle lathe with a working unit mounted on a cross-slide
Tour multibroche avec une unité de travail montée sur un chariot à deux-axes croisés

(30) Priorität: 07.10.2005 DE 202005015906 U
(43) Veröffentlichungstag der Anmeldung: 11.04.2007
(73) Patentinhaber: Alfred H. Schütte GmbH & Co. KG, 51105 Köln (DE)
(72) Erfinder: Herrscher, Dr. Albert, 51429 Bergisch Gladbach (DE); Krell, Dr. Markus, 50354 Hürth (DE)
(74) Vertreter: Gottschald, Jan

(56) Entgegenhaltungen:
- DE-A1- 19 649 016
- US-A- 5 910 201

## Beschreibung

Die vorliegende Erfindung betrifft eine Mehrspindeldrehmaschine mit den Merkmalen des Oberbegriffs von Anspruch 1.

Mehrspindeldrehmaschinen zeichnen sich dadurch aus, daß mehrere Werkstückspindeln und in der Regel mehrere Bearbeitungseinheiten mit Werkzeugeinheiten vorgesehen sind, so daß eine parallele Bearbeitung der jeweils eingespannten Werkstücke möglich ist. Bei den bekannten Mehrspindeldrehmaschinen ist jeder einzelnen Werkstückspindel mindestens eine im Arbeitsraum angeordnete Bearbeitungseinheit zugeordnet, so daß die "Packungsdichte" im Arbeitsraum generell hoch ist. Unter dieser hohen Packungsdichte leidet die Bedienbarkeit der Mehrspindeldrehmaschine, da bestimmte Komponenten nur schwer zugänglich sind. Verschärft wird diese Problematik dann, wenn Zusatzachsen oder angetriebene Werkzeuge eingesetzt werden, deren Versorgungsleitungen in der Regel durch den Arbeitsraum geführt werden. Dies gilt grundsätzlich auch für die Versorgungsleitungen für Betriebsstoffe wie Kühlschmierstoff, Schmiermittel o. dgl.

Die obige Problematik der hohen Packungsdichte im Arbeitsraum besteht seit vielen Jahren und wird bereits von der DD 214 073 A1 angesprochen. In dieser Veröffentlichung werden zunächst Mehrspindeldrehmaschinen diskutiert, die Bearbeitungseinheiten mit Kreuzschlitten zur Führung der jeweiligen Werkzeugeinheit aufweisen. Die Bearbeitungseinheiten sind dabei vollständig innerhalb des Arbeitsraums angeordnet. Zur Verbesserung der Zugänglichkeit zu den Werkstückspindeln wird in dieser Veröffentlichung für eine Mehrspindeldrehmaschine mit Mittelrohr vorgeschlagen, die Bearbeitungseinheiten jeweils am Mittelrohr anzuordnen. Die jeweilige Bearbeitungseinheit weist einen Längsschlitten auf, der entlang des Mittelrohrs an einer Längsführung geführt ist. Am Längsschlitten ist eine Querführung angeordnet, an der ein eine Werkzeugeinheit aufnehmender Querschlitten geführt ist. Die Packungsdichte im Arbeitsraum dieser Mehrspindeldrehmaschine ist unverändert hoch, so daß die oben genannten Nachteile bestehen bleiben.

Einige Jahre nach der obigen Veröffentlichung war das Problem der hohen Packungsdichte im Arbeitsraum von Mehrspindeldrehmaschinen immer noch nicht gelöst. Ein Beispiel hierfür zeigt die weitere bekannte Mehrspindeldrehmaschine (DE 41 40 466 A1), bei der jeder Werkstückspindel eine Bearbeitungseinheit für die Querbearbeitung sowie eine Bearbeitungseinheit für die Längsbearbeitung zugeordnet ist. Die Bearbeitungseinheiten für die Querbearbeitung sind mit den zugeordneten Werkzeugeinheiten vollständig im Arbeitsraum angeordnet und können wiederum mit einem Kreuzschlitten ausgestaltet sein.

Der obigen Problematik hat sich schließlich die bekannte Mehrspindeldrehmaschine (DE 196 49 016 B4), die den Ausgangspunkt der vorliegenden Erfindung bildet, angenommen. Es handelt sich hier um eine Mehrspindeldrehmaschine mit einer Spindeltrommel zur Aufnahme von sechs Werkstückspindeln, wobei den Spindellagen III bis VI jeweils zwei Bearbeitungseinheiten zugeordnet sind. Dies führt zunächst zu einer weiteren Verschärfung des Problems der hohen Packungsdichte im Arbeitsraum. Allerdings wird hier vorgeschlagen, den Quervorschubantrieb, den Längsvorschubantrieb und die Längsführung außerhalb des Arbeitsraums der Mehrspindeldrehmaschine anzuordnen. Der Quervorschubantrieb ist am Längsschlitten angeordnet und über ein durch den Längsschlitten laufendes Drehübertragungselement antriebstechnisch mit dem Querschlitten gekoppelt. Die Querführung und der Querschlitten sind unverändert im Arbeitsraum angeordnet. Dies kostet wiederum Bauraum innerhalb des Arbeitsraums und ist auch insoweit nachteilig, als die Querführung dem im Arbeitsraum umherspritzenden Kühlschmierstoff sowie umherfliegenden Spänen ausgesetzt ist. Ferner ist der oben genannte, die Versorgungsleitungen von angetriebenen Werkzeugen betreffende Nachteil unverändert vorhanden.

Der Erfindung liegt das Problem zugrunde, die bekannte Mehrspindeldrehmaschine derart auszugestalten und weiterzubilden, daß die Zugänglichkeit der im Arbeitsraum befindlichen Komponenten erhöht und die Gefahr der Verunreinigung und Beschädigung von Antriebs- und Führungskomponenten reduziert wird.

Das obige Problem wird bei einer Mehrspindeldrehmaschine mit den Merkmalen des Oberbegriffs von Anspruch 1 durch die Merkmale des kennzeichnenden Teils von Anspruch 1 gelöst.

Wesentlich ist zunächst, daß die Werkzeugeinheit der Bearbeitungseinheit, letztlich also das Werkzeug bzw. die Werkzeuge, am Längsschlitten der Bearbeitungseinheit angeordnet ist. Ferner ist die Längsführung der Bearbeitungseinheit am Querschlitten der Bearbeitungseinheit angeordnet. Der Erfindung liegt nun die Überlegung zugrunde, die Querführung der Bearbeitungseinheit vollständig außerhalb des Arbeitsraums anzuordnen. Damit ist gewährleistet, daß der für die Querführung notwendige Bauraum in einen Bereich außerhalb des Arbeitsraums verlegt wird, was bereits zu einer Reduzierung der Pakkungsdichte im Arbeitsraum führt. Der resultierende Abstand zwischen Querschlitten und zu bearbeitendem Werkstück in Z-Richtung wird dabei durch den an der Längsführung geführten Längsschlitten überbrückt.

Die bevorzugte Ausgestaltung gemäß Anspruch 2 führt das oben beschriebene Konzept konsequent weiter, indem auch der Querschlitten der Bearbeitungseinheit vollständig außerhalb des Arbeitsraums liegt. Eine weiter bevorzugte Ausgestaltung betrifft schließlich eine Mehrspindeldrehmaschine, bei der auch die Längsführung der Bearbeitungseinheit vollständig außerhalb des Arbeitsraums liegt.

Mit "Arbeitsraum" der Mehrspindeldrehmaschine ist hier ganz allgemein der unmittelbare Beeinflussungsbereich des jeweils laufenden Bearbeitungsprozesses gemeint. Dies ist vor dem Hintergrund herumfliegender Späne einerseits und der Werkzeugbewegungen andererseits zu verstehen. Eine körperliche Abgrenzung des Arbeitsraums gegenüber anderen Bereichen der Mehrspindeldrehmaschine, beispielsweise durch eine Trennwand o. dgl., ist nach dieser Definition nicht zwingend vorgesehen. Die Verlegung einer Komponente aus dem Arbeitsraum heraus kann daher auch bedeuten, daß die betreffende Komponente hinreichend weit von der Eingriffsstelle zwischen Werkstück und Werkzeug entfernt ist.

Bei der bevorzugten Ausgestaltung gemäß Anspruch 3 ist es jedoch so, daß die Querführung, der Querschlitten und/oder die Längsführung vom Arbeitsraum gesehen hinter der Vorderseite der Spindelkastenwand liegt bzw. liegen. In besonders bevorzugter Ausgestaltung ist es dann vorgesehen, daß ausschließlich der Längsschlitten durch die Spindelkastenwand hindurch in den Arbeitsraum ragt. Damit ist der Bauraumbedarf sowohl für die Querführung als auch für die Längsführung vollständig in den Bereich hinter der Spindelkastenwand verlegt worden.

Die bevorzugten Ausgestaltungen gemäß den Ansprüchen 8, 9 und 10 führen zu einer einfachen Montierbarkeit der Bearbeitungseinheit am Spindelkasten und außerdem zu einer besonders kompakten Anordnung.

Die Ansprüche 13 bis 17 betreffen die Verschwenkbarkeit des Längsschlittens, die einen weiteren Freiheitsgrad bei der Bearbeitung des Werkstücks erlaubt.

Die Ansprüche 21 und 22 zeigen eine besonders bevorzugte Ausgestaltung, bei der innerhalb des Arbeitsraums verlaufende Versorgungsleitungen für Werkzeugantriebe o. dgl. vollständig vermieden werden können.

Weitere Vorteile, Merkmale, Eigenschaften und Aspekte der vorliegenden Erfindung ergeben sich aus der folgenden Beschreibung bevorzugter Ausführungsformen anhand der Zeichnung. Es zeigt
- Fig. 1: einen Ausschnitt aus einer erfindungsgemäßen Mehrspindeldrehmaschine in einer schematischen Seitenansicht,
- Fig. 2: die in Fig. 1 dargestellte Mehrspindeldrehmaschine gemäß Ansicht II,
- Fig. 3: eine Prinzipdarstellung der Anordnung von Querführung, Querschlitten, Längsführung und Längsschlitten einer in Fig. 1 dargestellten Bearbeitungseinheit,
- Fig. 4: eine in Fig. 1 dargestellte Bearbeitungseinheit in einer schematischen Seitenansicht,

- Fig. 5: die Bearbeitungseinheit gemäß Fig. 4 in einer ausschnittsweisen, geschnittenen Seitenansicht,
- Fig. 6: eine Werkzeugeinheit für die in Fig. 4 dargestellte Bearbeitungseinheit mit einem nicht angetriebenem Werkzeug,
- Fig. 7: eine Werkzeugeinheit für die in Fig. 4 dargestellte Bearbeitungseinheit mit einem angetriebenem Werkzeug.

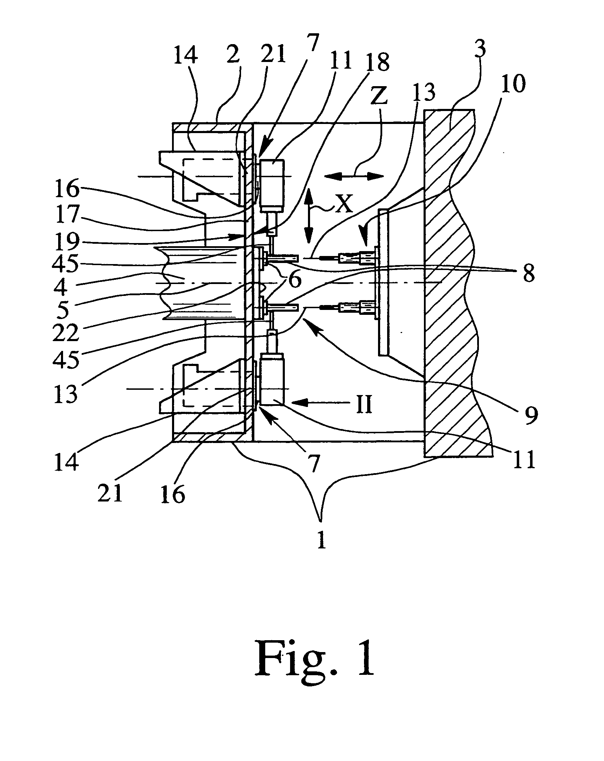

Fig. 1 zeigt einen Ausschnitt aus einer Mehrspindeldrehmaschine, die ein Maschinengestell 1 mit einem Spindelkasten 2 und einem Antriebskasten 3 aufweist. Am Spindelkasten 2 ist in üblicher Weise eine Spindeltrommel 4 zur Aufnahme mehrerer, parallel zur Spindeltrommelachse 5 ausgerichteter Werkstückspindeln 6 angeordnet. Es sind ferner eine Reihe von Bearbeitungseinheiten 7 zur Bearbeitung von in den Werkstückspindeln 6 eingespannten Werkstücken 8 vorgesehen. Die Bearbeitung der Werkstücke 8 erfolgt im Arbeitsraum 9.

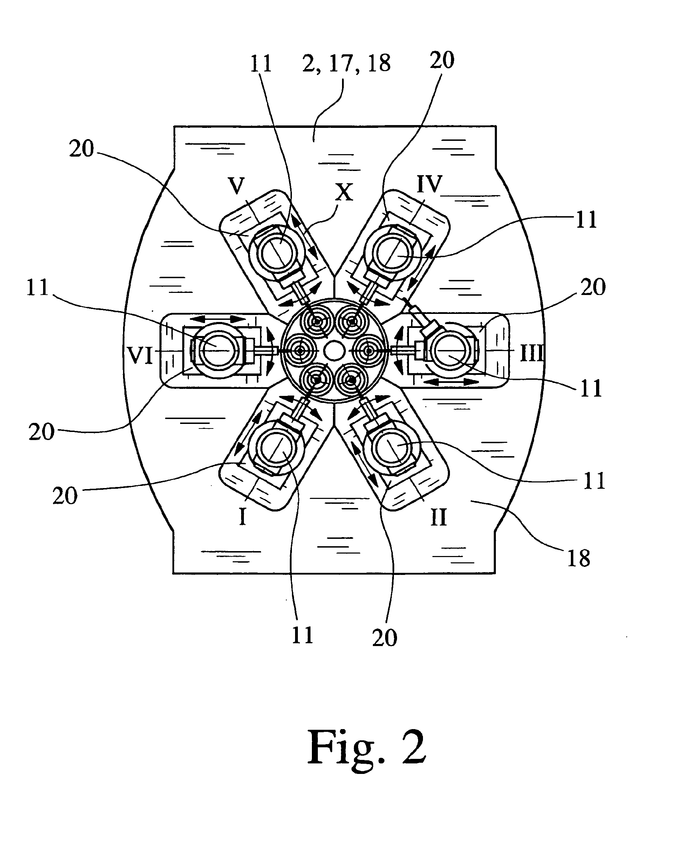

Grundsätzlich ist mindestens eine Bearbeitungseinheit 7 zur Bearbeitung von in den Werkstückspindeln 6 eingespannten Werkstücken 8 vorgesehen. Üblicherweise ist jedoch jeder Werkstückspindel 6 zumindest eine Bearbeitungseinheit 7 zugeordnet. Bei dem in Fig. 2 dargestellten und insoweit bevorzugten Ausführungsbeispiel sind sechs Werkstückspindeln 6 und entsprechend sechs Bearbeitungseinheiten 7 sternförmig angeordnet. Die Anzahl von Werkstückspindeln 6 und Bearbeitungseinheiten 7 kann je nach Auslegung der Mehrspindeldrehmaschine variieren.

Im folgenden werden Merkmale und Funktionen der Bearbeitungseinheiten 7 an einer einzigen Bearbeitungseinheit 7 erläutert.

Die Bearbeitungseinheit 7 ist mit einer in der Regel auswechselbaren Werkzeugeinheit 11 ausgestattet. Zur Führung der Werkzeugeinheit 11 weist die Bearbeitungseinheit 7 einen an einer Querführung 12 in X-Richtung, also senkrecht zu der jeweiligen Spindelachse 13, geführten Querschlitten 14 und einen an einer Längsführung 15 in Z-Richtung, also parallel zu den Spindelachsen 13, gerührten Längsschlitten 16 auf.

Wesentlich ist zunächst, daß die Werkzeugeinheit 11 der Bearbeitungseinheit 7 am Längsschlitten 16 der Bearbeitungseinheit 7 angeordnet ist. Um nun die Querbewegung der Werkzeugeinheit 11 zu gewährleisten, ist die Längsführung 15 der Bearbeitungseinheit 7 am Querschlitten 14 der Bearbeitungseinheit 7 angeordnet. Die Querführung 12 der Bearbeitungseinheit 7 liegt hier vollständig außerhalb des Arbeitsraums 9, wie anhand der Fig. 1 bis 4 noch gezeigt wird.

Im dargestellten und insoweit bevorzugten Ausführungsbeispiel ist der Querschlitten 14 der Bearbeitungseinheit 7 ebenfalls vollständig außerhalb des Arbeitsraums 9 angeordnet. Schließlich ist vorzugsweise auch die Längsführung 15 der Bearbeitungseinheit 7 vollständig außerhalb des Arbeitsraums 9 angeordnet, so daß ausschließlich der Längsschlitten 16 in den Arbeitsraum 9 hineinragt.

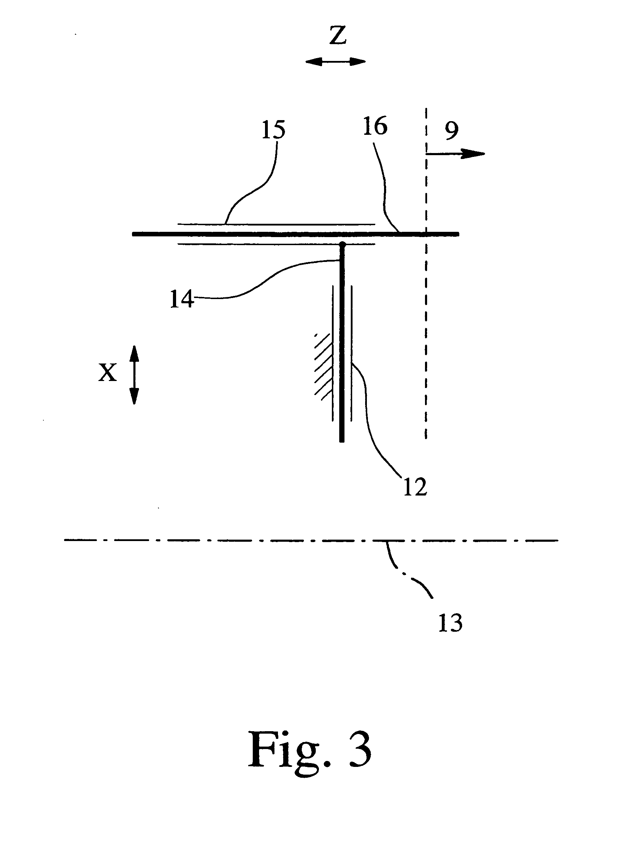

Fig. 3 zeigt das Grundprinzip der Führung von Querschlitten 14 und Längsschlitten 16. Wesentlich ist in erster Linie die Kopplung zwischen dem Querschlitten 14 einerseits und der Längsführung 15 andererseits.

Die Vorteile der oben beschriebenen Anordnung ergeben sich unmittelbar aus den Darstellungen gemäß den Fig. 1 bis 4. Alle die Bearbeitungseinheit 7 betreffenden Führungen, und, wie noch gezeigt wird, alle die Bearbeitungseinheit 7 betreffenden Vorschubantriebe liegen außerhalb des Arbeitsraums 9, was zu einer erheblichen Reduzierung der Packungsdichte im Arbeitsraum 9 führt. Ferner sind alle schmutzempfindlichen Komponenten der Bearbeitungseinheit 7, insbesondere die Führungen 12, 15, außerhalb des Arbeitsraums 9, hier hinter der Spindelkastenwand 17 des Spindelkastens 2, angeordnet.

Die Spindeltrommel 4 ragt vorliegend durch die Spindelkastenwand 17 hindurch in den Arbeitsraum 9. Die Spindelkastenwand 17 weist eine dem Arbeitsraum 9 zugewandte Vorderseite 18 und eine Rückseite 19 auf. Bei dem dargestellten und insoweit bevorzugten Ausführungsbeispiel ist die Querführung 12, der Querschlitten 14 und die Längsführung 15 vom Arbeitsraum 9 gesehen vollständig hinter der Vorderseite 18 der Spindelkastenwand 17 gelegen. Grundsätzlich kann es aber auch vorgesehen sein, daß zumindest ein Teil der Querführung 12 oder des Querschlittens 14 bzw. ein Teil der Längsführung 15 durch die Spindelkastenwand 17 hindurchragt. Nach der obigen Definition des Arbeitsraums 9 ist dieser ja nicht notwendigerweise durch die Spindelkastenwand 17 begrenzt.

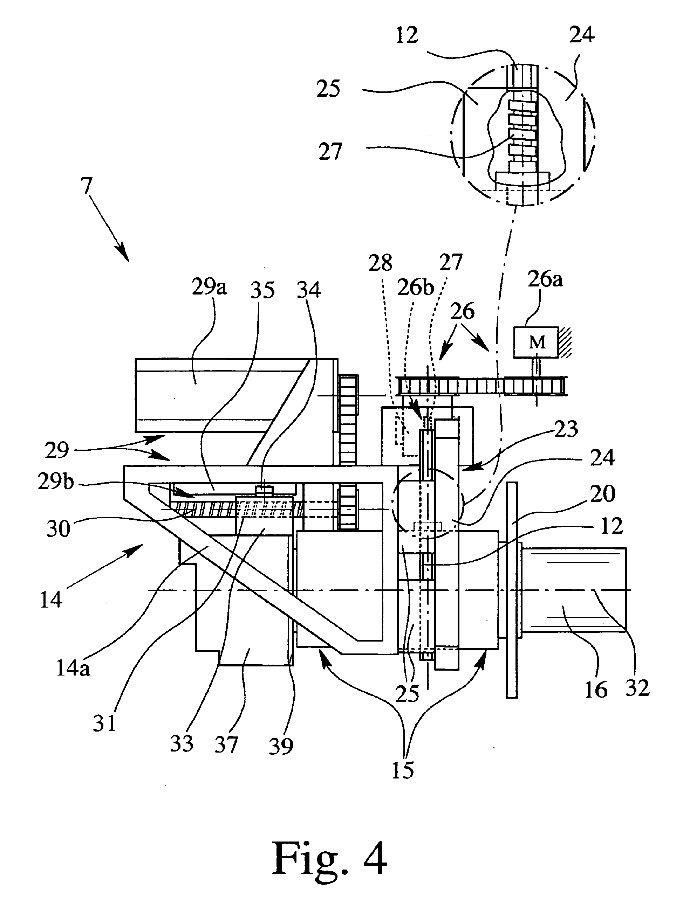

Bei dem dargestellten und insoweit bevorzugten Ausführungsbeispiel ragt, wie bereits erläutert, der Längsschlitten 16 durch die Spindelkastenwand 17 hindurch in den Arbeitsraum 9, wobei der Längsschlitten 16 von einer Abdeckplatte 20 zur Spindelkastenwand 17 hin abdichtend umschlossen ist (Fig. 2, 4). Die Abdeckplatte 20 erstreckt sich im wesentlichen parallel zur Spindelkastenwand 17 und liegt im wesentlichen auf der Spindelkastenwand 17 auf. Die Abdeckplatte 20 ist so ausgelegt, daß sie den für die Durchführung des Längsschlittens 16 notwendigen Ausschnitt 21 in der Spindelkastenwand 17 gerade abdeckt. Dabei ist die Abdeckplatte 20 vorzugsweise derart linear auf der Vorderseite 18 der Spindelkastenwand 17 geführt, daß sie die Bewegung des Längsschlittens 16 in X-Richtung nicht behindert. Die Führung der Abdeckplatte 20 ist entsprechend parallel zur X-Richtung ausgerichtet.

Es darf darauf hingewiesen werden, daß die Spindelkastenwand 17 im vorliegenden Zusammenhang auch eine dem Arbeitsraum 9 zugewandte Abdekkung, beispielsweise in der Form eines Metallblechs o. dgl., umfassen kann, die dann nicht Bestandteil des Maschinengestells 1 ist. In diesem Fall wirkt die Abdeckplatte 20 in oben beschriebener Weise mit der Abdeckung zusammen.

Es wurde bereits erläutert, daß nach der obigen Definition des Arbeitsraums 9 der Arbeitsraum 9 nicht notwendigerweise durch die Spindelkastenwand 17 abgeschlossen sein muß. Beispielsweise kann es für die Erzielung der obigen Vorteile ausreichen, daß die Querführung 12, der Querschlitten 14 bzw. die Längsführung 15 vom Arbeitsraum 9 gesehen vollständig hinter einer Trommelebene liegt bzw. liegen. Die Trommelebene ist hier so definiert, daß die Stirnfläche 22 der Spindeltrommel 4 in der Trommelebene liegt.

In besonders bevorzugter Ausgestaltung ist die Bearbeitungseinheit 7 von der dem Arbeitsraum 9 abgewandten Seite des Spindelkastens 2 her am Spindelkasten 2, hier an der Spindelkastenwand 17, montierbar. Dies ist insoweit vorteilhaft, als der Ausschnitt 21 für den Längsschlitten 16 in der Spindelkastenwand 17 möglichst klein gewählt werden kann, ohne daß damit eine Beschränkung der Auslegung der Bearbeitungseinheit 7 im übrigen verbunden ist. Grundsätzlich ist es bei geeigneter Auslegung aber auch denkbar, die Bearbeitungseinheit 7 von der dem Arbeitsraum 9 zugewandten Seite des Spindelkastens 9 her an der Spindelkastenwand 17 montierbar auszugestalten. Der Teil der Bearbeitungseinheit 7, der die Querführung 12 trägt, muß dann ggf. bei der Montage ganz oder nur zum Teil durch den Ausschnitt 21 hindurchgeführt werden.

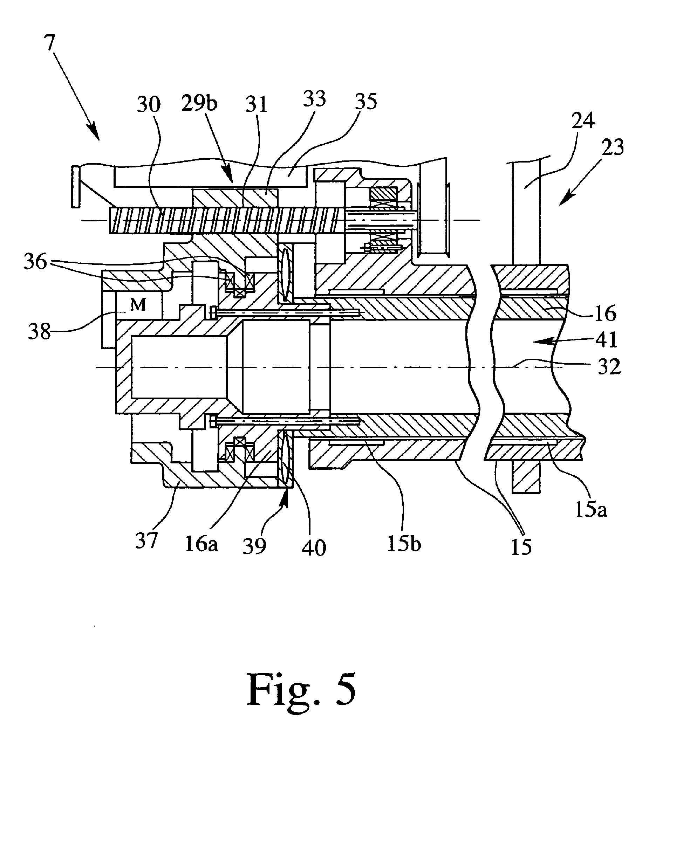

Die Fig. 4 und 5 zeigen die Bearbeitungseinheit 7 ohne Werkzeugeinheit 11 im nicht montierten Zustand in einer Seitenansicht. Der Darstellung gemäß Fig. 4 ist zu entnehmen, daß die Querführung 12 an einem Montagerahmen 23 angeordnet ist. Der Montagerahmen 23 ist im eingebauten Zustand am Spindelkasten 2, hier an der Rückseite 19 der Spindelkastenwand 17 befestigt. Im dargestellten und insoweit bevorzugten Ausführungsbeispiel ist die Bearbeitungseinheit 7 ausschließlich über den Montagerahmen 23 am Spindelkasten 2 befestigt. Dies gewährleistet eine einfache Montage einerseits und einen einfachen Austausch der Bearbeitungseinheit 7 andererseits.

Für die Ausgestaltung des Montagerahmens 23 sind zahlreiche Varianten denkbar. In bevorzugter Ausgestaltung weist der Montagerahmen 23 zwei im wesentlichen parallel zur X-Richtung verlaufende, und in Y-Richtung voneinander beabstandete Schenkel 24 auf, wobei die Querführung 12 aus zwei jeweils an einem Schenkel 24 des Montagerahmens 23 angeordneten Führungsschienen besteht. Dies ist in der Darstellung gemäß Fig. 4 zu erkennen. An den Führungsschienen sind auf jeder Seite zwei Schlittenelemente 25 geführt, die Bestandteil des Querschlittens 14 sind. An den Schlittenelementen 25 ist entsprechend ein Querschlittenrahmen 14a angeordnet, der alle übrigen Komponenten des Querschlittens 14 trägt.

Hinsichtlich der resultierenden Kompaktheit und hinsichtlich des resultierenden Kraftflusses ist es nach einer bevorzugten Ausgestaltung vorgesehen, daß der Längsschlitten 16 und vorzugsweise auch die Längsführung 15 durch den Montagerahmen 23, also zwischen den beiden Schenkeln 24, hindurchläuft.

Die Schenkel 24 des Montagerahmens 23 umschließen dann gewissermaßen den Längsschlitten 16 bzw. die Längsführung 15.

Die Längsführung 15 ist hier und vorzugsweise mit einer hydrostatischen Lagerung ausgestattet, die in Längsrichtung der Längsführung 15 gesehen vordere Lagertaschen 15a und hintere Lagertaschen 15b aufweist. Auf die Darstellung von ölführenden Leitungen und von Dichtungen wurde hier zugunsten der Übersichtlichkeit verzichtet. Die vorderen Lagertaschen 15a erstrecken sich im eingebauten Zustand in die Spindelkastenwand 17 hinein, so daß sich ein optimaler Kraftfluß der vom noch zu erläuternden Quervorschubantrieb 26 über die Längsführung 15 auf den Längsschlitten 16 wirkenden Antriebskraft ergibt.

Hinsichtlich einer kostengünstigen Fertigung und einer hohen Gesamtsteifigkeit ist es besonders vorteilhaft, wenn der Querschlittenrahmen 14a und die Längsführung 15 einstückig, vorzugsweise als Gußteil ausgeführt sind. Grundsätzlich kann die Längsführung 15 aber auch mit dem Querschlitten 14 im übrigen, insbesondere mit dem Querschlittenrahmen 14a verschraubt werden.

Für den motorischen Vorschub der Werkzeugeinheit 11 in X-Richtung ist der Quervorschubantrieb 26 mit einem am Maschinengestell 1 angeordneten Quervorschubantriebsmotor 26a und einem Quervorschubgetriebe 26b vorgesehen. Dabei nimmt der Montagerahmen 23 einen Teil des Quervorschubgetriebes 26b auf. Das Quervorschubgetriebe 26b weist ein Spindel-Spindelmuttergetriebe auf, wobei das untere Ende der Spindel 27 des Spindel-Spindelmuttergetriebes 26b starr am Querschlitten 14 befestigt ist. Dies ist in Fig. 4 dargestellt. Die Spindelmutter 28 ist axial am Montagerahmen 23 festgelegt und läßt sich durch den am Maschinengestell 1 angeordneten Quervorschubantriebsmotor 26a motorisch verstellen. Grundsätzlich sind auch andere Ausgestaltungen für den Quervorschubantrieb 26 denkbar. Vorteilhaft könnte beispielsweise die Anwendung eines Hydraulikantriebs o. dgl. sein.

Für den motorischen Vorschub der Werkzeugeinheit 11 in Z-Richtung ist am Querschlitten 14 ein Längsvorschubantrieb 29 vorgesehen, der mit einem Längsvorschubantriebsmotor 29a und mit einem Längsvorschubgetriebe 29b ausgestattet ist. Wie den Darstellungen gemäß Fig. 4, 5 zu entnehmen ist, ist auch das Längsvorschubgetriebe 29b als Spindel-Spindelmuttergetriebe ausgestaltet. Die Spindel 30 ist hier mit dem am Querschlitten 14 angeordneten Längsvorschubantriebsmotor 29a gekoppelt und wirkt in üblicher Weise mit einer Spindelmutter 31 zusammen. Die Spindelmutter 31 ist in noch zu erläuternder Weise mit dem Längsschlitten 16 gekoppelt. Auch für den Längsvorschubantrieb 29 gilt, daß grundsätzlich andere Antriebsvarianten anwendbar sind.

Besonders vorteilhaft ist es, wenn der Längsschlitten 16 jedenfalls im Bereich seines Eingriffs mit der Längsführung 15 im Querschnitt kreisförmig ausgestaltet ist und dadurch in der Längsführung 15 um eine parallel zur Z-Richtung ausgerichtete Schwenkachse 32 schwenkbar ist. Die Schwenkbarkeit des Längsschlittens 16 läßt sich beispielsweise für einen Werkzeugwechsel, ggf. unter Nutzung eines Werkzeugrevolvers oder für eine außermittige Werkstückbearbeitung nutzen. Die Schwenkbarkeit kann manuell oder motorisch vorgesehen sein, wie noch gezeigt wird.

Um den oben beschriebenen motorischen Vorschub des Längsschlittens 16 in Z-Richtung bei gleichzeitiger Schwenkbarkeit des Längsschlittens 16 garantieren zu können, ist zunächst ein mit dem Längsschlitten 16 gekoppelter Stützschlitten 33 vorgesehen, der an einer am Querschlitten 14 angeordneten Stützschlittenführung 35 geführt ist. Die Stützschlittenführung 35 ist parallel zur Z-Richtung ausgerichtet und radial zur Schwenkachse 32 des Längsschlittens 16 versetzt angeordnet. Damit lassen sich grundsätzlich - bei entsprechender Kopplung zwischen dem Stützschlitten 33 und dem Längsschlitten 16 - auf den Längsschlitten 16 um seine Schwenkachse 32 wirkende Drehmomente über die Stützschlittenführung 35 abstützen. Der Darstellung gemäß Fig. 4 ist zu entnehmen, daß der Stützschlitten 33 mittels Stützrollen 34 die als Steg ausgestaltete Stützschlittenführung 35 umgreift. Für die Ausgestaltung der Stützschlittenführung 35 sind auch andere Varianten denkbar, beispielsweise eine lineare Wälzführung o. dgl.

Der Stützschlitten 33 ist über eine Mitnehmeranordnung 37 derart mit dem Längsschlitten 16 gekoppelt, daß Stützschlitten 33 und Längsschlitten 16 in Z-Richtung bei gleichzeitiger Schwenkbarkeit des Längsschlittens 16 bewegungsgekoppelt sind. Es ist hierfür ein Axiallager 36 zwischen Stützschlitten 33 und Längsschlitten 16 vorgesehen, so daß der Längsschlitten 16 der Linearbewegung des Stützschlittens 33 folgt, gleichzeitig aber um seine Schwenkachse 32 schwenkbar ist. Grundsätzlich kann das Axiallager 36 auch als kombiniertes Radial-/Axiallager ausgestaltet sein. Der stützschlittenseitige Teil des Axiallagers 36 ist hier in der Mitnehmeranordnung 37 angeordnet, die den Längsschlitten 16 im wesentlichen umschließt (Fig. 5).

Der Stützschlitten 33 trägt die Spindelmutter 31 des Längsvorschubgetriebes 29b, so daß der Längsschlitten 16 mittels des Längsvorschubantriebsmotors 29a über das Längsvorschubgetriebe 29b und die Mitnehmeranordnung 37 in Z-Richtung verstellbar ist.

Zwischen den Stützschlitten 33 bzw. die Mitnehmeranordnung 37 und den Längsschlitten 16 ist in bevorzugter Ausgestaltung ein Schwenkantrieb 38 geschaltet, der das motorische Verschwenken des Längsschlittens 16 um seine Schwenkachse 32 erlaubt. Dabei stützt sich der Schwenkantrieb 38 einerseits über den Stützschlitten 33 bzw. die Mitnehmeranordnung 37 und die Stützschlittenführung 35 am Querschlitten 14 und andererseits entsprechend am Längsschlitten 16 ab.

Um die jeweils motorisch eingenommenen Schwenkstellungen des Längsschlittens 16 zu fixieren, ist in weiter bevorzugter Ausgestaltung eine Bremse 39 vorgesehen. In dem in Fig. 5 dargestellten und insoweit bevorzugten Ausführungsbeispiel ist die Bremse 39 an der Mitnehmeranordnung 37 angeordnet. Die Bremse 39 weist eine Kammer 40 auf, die mit Druckluft beaufschlagbar ist. Im nicht mit Druckluft beaufschlagten Zustand ist die Bremse 39 aktiviert. Dies bedeutet, daß die Bremse 39 in Eingriff mit dem Längsschlitten 16, vorzugsweise mit einem mit dem Längsschlitten 16 gekoppelten Flanschelement 16a, steht. Bei Beaufschlagung der Kammer 40 mit Druckluft dehnt sich ein nachgiebiger Bestandteil der Bremse 39 aus, so daß die Bremse 39 außer Eingriff von dem Längsschlitten 16 bzw. dem Flanschelement 16a kommt. Dies hat u.a. den Vorteil, daß bei Ausfall der Energieversorgung ein unkontrolliertes Verschwenken des Längsschlittens 16 verhindert wird. Es sind aber auch andere Realisierungsmöglichkeiten für eine derartige Bremse 39 denkbar.

In einer besonders einfachen und robusten Ausgestaltung erlaubt der Schwenkantrieb 38 das motorische Verschwenken des Längsschlittens 16 um seine Schwenkachse 32 in eine vorbestimmte Anzahl von Endstellungen, vorzugsweise in zwei Endstellungen. Dies ist beispielsweise vorteilhaft anwendbar für die Werkzeugeinheit 11, die in Fig. 2 der Spindellage III zugeordnet ist. Je nach Endstellung kann durch das motorische Verschwenken des Längsschlittens 16 ein Wechsel des jeweiligen Werkzeugs vollzogen werden.

Für die Ausgestaltung des Schwenkantriebs 38 sind eine Reihe vorteilhafter Varianten denkbar. Beispielsweise kann es sich bei dem Schwenkantrieb 38 um einen ungeregelten Hydraulik- oder Druckluftantrieb, vorzugsweise um einen Kolbenantrieb, handeln. Eine Realisierungsmöglichkeit besteht dann darin, an dem angetriebenen Kolben eine Zahnstange vorzusehen, die mit einem entsprechenden Ritzel am Längsschlitten 16 in Eingriff steht.

In bestimmten Anwendungsfällen kann es aber auch notwendig sein, den Längsschlitten 16 NC-gesteuert um seine Schwenkachse 32 zu verschwenken, so daß der Schwenkantrieb 38 das motorische Verschwenken des Längsschlittens 16 in beliebige Endstellungen erlaubt. In besonders platzsparender und daher bevorzugter Ausgestaltung weist der Schwenkantrieb 38 einen Torquemotor auf. Grundsätzlich kann der Schwenkantrieb 38 aber auch mit einem über einen Riementrieb angekoppelten Antriebsmotor ausgestattet sein.

In anderen Anwendungsfällen ist ein Verschwenken des Längsschlittens 16 nicht erforderlich. In diesem Fall ist die Kopplung zwischen dem Stützelement 33 bzw. der Mitnehmeranordnung 37 und dem Längsschlitten 16 als Klemmung ausgestaltet. Die Bremse 39 entfällt bei einer derartigen Ausgestaltung.

Ferner ist es denkbar, daß der Längsschlitten 16 einerseits und die Längsführung 15 andererseits so ausgestaltet sind, daß ein Verschwenken des Längsschlittens 16 gar nicht erst möglich ist. Beispielsweise kann es vorgesehen sein, daß der Längsschlitten 16 im Querschnitt als Vierkant o. dgl. ausgestaltet ist.

Es fällt auf, daß bei der oben beschriebenen Anordnung von Führungen 12, 15 und Schlitten 14, 16 alle der Bearbeitungseinheit 7 zugeordneten Antriebe 26, 29, 38 mit wenig Aufwand in einen Bereich außerhalb des Arbeitsraums 9 gelegt werden können. Verglichen mit einer Anordnung von Antrieben innerhalb des Arbeitsraums 9 führt dies grundsätzlich zu einer Erhöhung der Lebensdauer der beteiligten Komponenten.

In besonders bevorzugter Ausgestaltung weist der Längsschlitten 16 einen Hohlraum 41 auf, der sich vorzugsweise über die gesamte Länge des Längsschlittens 16 erstreckt. Im dargestellten und insoweit bevorzugten Ausführungsbeispiel ist der Längsschlitten 16 nach Art einer Pinole ausgestaltet.

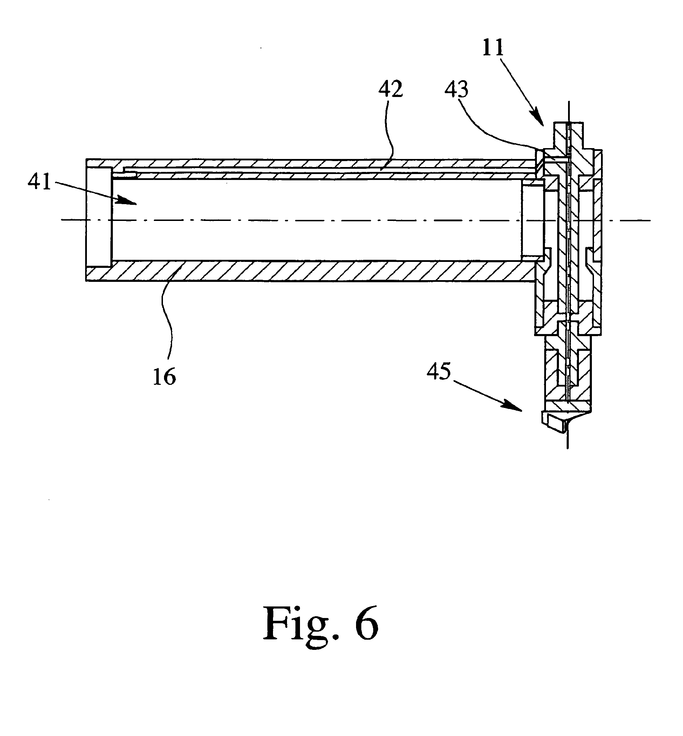

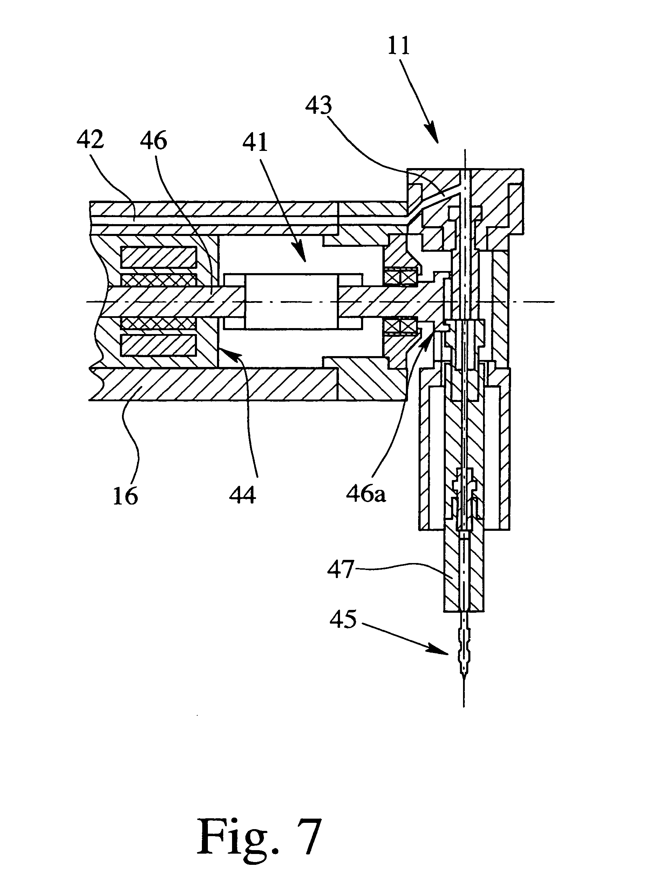

Die Ausgestaltung des Längsschlittens 16 mit dem oben beschriebenen Hohlraum 41 hat bei der oben beschriebenen Anordnung von Führungen 12, 15 und Schlitten 14, 16 ganz besondere Vorteile. Es läßt sich beispielsweise den Darstellungen gemäß Fig. 6, 7 entnehmen, daß mit diesem Konzept eine Relativbewegung zwischen dem Längsschlitten 16 und der Werkzeugeinheit 11 nicht mehr auftritt. Hiermit ist es ohne weiteres möglich, daß durch den Hohlraum 41 des Längsschlittens 16 Versorgungsleitungen für Betriebsstoffe, beispielsweise Kühlschmierstoff, Schmiermittel, o. dgl. und/oder Versorgungsleitungen für Hydraulik, Pneumatik oder Elektrik geführt sind. Der Arbeitsraum 9 ist damit von jeglichen Versorgungsleitungen befreit.

Nach einer besonders bevorzugten Ausgestaltung, insbesondere in Verbindung mit der noch zu erläuternden Variante mit angetriebenen Werkzeugen, ist es vorgesehen, daß im Längsschlitten 16 über seine gesamte Länge zumindest ein Kanal 42 vorgesehen ist, der bzw. die jeweils als Versorgungsleitung für Betriebsstoffe, beispielsweise Kühlschmierstoff, Schmiermittel, o. dgl. und/oder als Versorgungsleitung für Hydraulik oder Pneumatik und/oder als Durchführung für elektrische Versorgungsleitungen dient bzw. dienen. Bei der Ausgestaltung des Längsschlittens 16 als nach Art einer Pinole kann der Kanal 42 bzw. können die Kanäle 42 in der Wand der Pinole angeordnet sein. Dies ist den Darstellungen gemäß Fig. 6, 7 zu entnehmen. Sofern mehrere Kanäle vorgesehen sind, so können diese zueinander parallel und hinsichtlich des Hohlraums 41 der Pinole umlaufend angeordnet sein.

Fig. 6 zeigt eine Werkzeugeinheit 11 mit einem nicht angetriebenen Werkzeug 45, die am Längsschlitten 16 angeordnet ist. Es läßt sich der Darstellung gemäß Fig. 6 entnehmen, daß hier ein Kanal 42 im Längsschlitten 16 in einen weiterführenden Kanal 43 in der Werkzeugeinheit 11 überführt wird. Hier wird durch die Kanäle 42, 43 Kühlschmierstoff geleitet.

Dadurch, daß eine Relativbewegung zwischen dem Längsschlitten 16 und der Werkzeugeinheit 11 bei der vorschlagsgemäßen Lösung nicht auftritt, ist auch die Realisierung angetriebener Werkzeuge 45 mit minimalem Aufwand verbunden. In bevorzugter Ausgestaltung weist der Längsschlitten 16 den Antriebsmotor 44 für den Antrieb des jeweiligen Werkzeugs 45 in seinem oben beschriebenen Hohlraum 41 auf. Dies ist in Fig. 7 anhand eines angetriebenen Bohrwerkzeugs 45 gezeigt. Die Antriebswelle 46 des Antriebsmotors 44 erstreckt sich hier im wesentlichen in Längsrichtung des Längsschlittens 16, also parallel zur Z-Richtung. Die Antriebswelle 46 ist über ein Zahnradgetriebe 46a mit der Werkzeugspindel 47 des Bohrwerkzeugs 45 gekoppelt. Eine derartig gekapselte Unterbringung des Antriebsmotors 44 außerhalb des Arbeitsraums 9 ist einerseits besonders platzsparend und für den Antriebsmotor 44 besonders schonend.

Bei einer ganz besonders einfachen, insbesondere für die Einstechbearbeitung vorgesehenen Variante ist es vorgesehen, daß die Längsführung 15 und der Längsschlitten 16 starr miteinander gekoppelt sind und einen Längsausleger bilden, an dem die Werkzeugeinheit 11 angeordnet ist. Der Längsausleger bildet einen starren Körper, der durch seine Anordnung am Querschlitten 14 in X-Richtung, nicht jedoch in Z-Richtung verstellbar ist. Von dieser Ausgestaltung ist in konsequenter Weiterführung auch umfaßt, daß überhaupt keine körperlich getrennte Längsführung mehr vorgesehen ist, sondern daß der Längsausleger im wesentlichen einstückig ausgebildet ist.

Alle obigen Ausführungen zu der Bearbeitungseinheit 7 mit Längsführung 15 und Längsschlitten 16 gelten auch für die letztgenannte, einfache Ausgestaltung, wobei zu berücksichtigen ist, daß die Längsführung 15 und der Längsschlitten 16 zusammen den Längsausleger bilden. Von besonderer Bedeutung ist auch hier, daß die Querführung 12 der Bearbeitungseinheit 7 außerhalb des Arbeitsraums 9 liegt.

Die vorschlagsgemäße Mehrspindeldrehmaschine umfaßt, wie oben erläutert, in der Regel mehrere Bearbeitungseinheiten 7, die jeweils unterschiedlich ausgestaltet sein können. Einige der Bearbeitungseinheiten 7 können für die Verstellung der Werkzeugeinheit 11 sowohl in X-Richtung als auch in Z-Richtung ausgelegt sein. Andere Bearbeitungseinheiten 7 lassen ggf. nur eine Verstellung der Werkzeugeinheit 11 in X-Richtung zu. Eine Beschränkung möglicher Kombinationen von Bearbeitungseinheiten 7 ist hier nicht vorgesehen.

Abschließend darf noch darauf hingewiesen werden, daß die oben beschriebene, spindelkastenseitige Bearbeitungseinheit 7 grundsätzlich auch als antriebskastenseitige Bearbeitungseinheit 10 ausgestaltet sein kann. Alle obigen Ausführungen im Hinblick auf das Zusammenwirken der Bearbeitungseinheit 7 mit dem Spindelkasten 2 gelten dann entsprechend für das Zusammenwirken der Bearbeitungseinheit 10 mit dem Antriebskasten 3. Das gleiche gilt grundsätzlich auch für eine ggf. vorhandene Anordnung zur Bearbeitung der zweiten bzw. rückwärtigen Werkstückseite.

## Patentansprüche

1. Mehrspindeldrehmaschine mit einer an einem Spindelkasten (2) angeordneten Spindeltrommel (4) zur Aufnahme mehrerer, parallel zur Spindeltrommelachse (5) ausgerichteter Werkstückspindeln (6) und mit mindestens einer Bearbeitungseinheit (7) zur Bearbeitung von in den Werkstückspindeln (6) eingespannten Werkstücken (8) in einem Arbeitsraum (9), wobei die Bearbeitungseinheit (7) mit einer vorzugsweise auswechselbaren Werkzeugeinheit (11) ausgestattet ist, wobei die Bearbeitungseinheit (7) zur Führung der Werkzeugeinheit (11) einen an einer Querführung (12) in X-Richtung - senkrecht zu der jeweiligen Spindelachse (13) - geführten Querschlitten (14) und einen an einer Längsführung (15) in Z-Richtung - parallel zu den Spindelachsen (13) - geführten Längsschlitten (16) aufweist,
**dadurch gekennzeichnet,**
**daß** die Werkzeugeinheit (11) der Bearbeitungseinheit (7) am Längsschlitten (16) der Bearbeitungseinheit (7) angeordnet ist, daß die Längsführung (15) der Bearbeitungseinheit (7) am Querschlitten (14) der Bearbeitungseinheit (7) angeordnet ist und daß die Querführung (12) der Bearbeitungseinheit (7) vollständig außerhalb des Arbeitsraums (9) liegt.

2. Mehrspindeldrehmaschine nach Anspruch 1, **dadurch gekennzeichnet, daß** der Querschlitten (14) der Bearbeitungseinheit (7) vollständig außerhalb des Arbeitsraums (9) liegt, und/oder, daß die Längsführung (15) der Bearbeitungseinheit (7) vollständig außerhalb des Arbeitsraums (9) liegt.

3. Mehrspindeldrehmaschine nach Anspruch 1 oder 2, **dadurch gekennzeichnet, daß** die Spindeltrommel (4) durch die Spindelkastenwand (17) hindurch in den Arbeitsraum (9) ragt und daß die Querführung (12) und/oder der Querschlitten (14) und/oder die Längsführung (15) vom Arbeitsraum (9) gesehen vorzugsweise vollständig hinter der dem Arbeitsraum (9) zugewandten Vorderseite (18) der Spindelkastenwand (17) liegt bzw. liegen.

4. Mehrspindeldrehmaschine nach einem der vorhergehenden Ansprüche, **dadurch gekennzeichnet, daß** der Längsschlitten (16) durch die Spindelkastenwand (17) hindurch in den Arbeitsraum (9) ragt, vorzugsweise, daß der Längsschlitten (16) von einer Abdeckplatte (20) vorzugsweise zur Spindelkastenwand (17) hin abdichtend umschlossen ist, weiter vorzugsweise, daß die Abdeckplatte (20) derart linear auf der dem Arbeitsraum (9) zugewandten Vorderseite (18) der Spindelkastenwand (17) geführt ist, daß sie die Bewegung des Längsschlittens (16) in X-Richtung nicht behindert.

5. Mehrspindeldrehmaschine nach einem der vorhergehenden Ansprüche, **dadurch gekennzeichnet, daß** die Spindelkastenwand (17) eine dem Arbeitsraum (9) zugewandte Abdeckung umfaßt, die nicht Bestandteil des Maschinengestells (1) ist.

6. Mehrspindeldrehmaschine nach einem der vorhergehenden Ansprüche, **dadurch gekennzeichnet, daß** die Spindeltrommel (4) eine dem Arbeitsraum (9) zugewandte, in einer Trommelebene liegende Stirnfläche (22) aufweist und daß die Querführung (12) und/oder der Querschlitten (14) und/oder die Längsführung (15) vom Arbeitsraum (9) gesehen vorzugsweise vollständig hinter der Trommelebene liegt bzw. liegen.

7. Mehrspindeldrehmaschine nach einem der vorhergehenden Ansprüche, **dadurch gekennzeichnet, daß** die Bearbeitungseinheit (7) von der dem Arbeitsraum (9) abgewandten Seite des Spindelkastens (2) her am Spindelkasten (2) montierbar ist.

8. Mehrspindeldrehmaschine nach einem der vorhergehenden Ansprüche, **dadurch gekennzeichnet, daß** die Querführung (12) an einem Montagerahmen (23) angeordnet ist und daß der Montagerahmen (23) im eingebauten Zustand am Spindelkasten (2) befestigt ist, vorzugsweise, daß die Bearbeitungseinheit (7) ausschließlich über den Montagerahmen (23) am Spindelkasten (2) befestigt ist.

9. Mehrspindeldrehmaschine nach Anspruch 8, **dadurch gekennzeichnet, daß** der Montagerahmen (23) zwei parallel zur X-Richtung verlaufende Schenkel (24) aufweist und daß die Querführung (12) an beiden Schenkeln (24) des Montagerahmens (23) jeweils eine Führungsschiene aufweist.

10. Mehrspindeldrehmaschine nach Anspruch 8 oder 9, **dadurch gekennzeichnet, daß** der Längsschlitten (16) und vorzugsweise auch die Längsfiihrung (15) durch den Montagerahmen (23) hindurchläuft.

11. Mehrspindeldrehmaschine nach einem der vorhergehenden Ansprüche, **dadurch gekennzeichnet, daß** ein Quervorschubantrieb (26) mit einem Quervorschubantriebsmotor (26a) und einem Quervorschubgetriebe (26b) vorgesehen ist, vorzugsweise, daß das Quervorschubgetriebe (26b) ein Spindel-Spindelmuttergetriebe aufweist, weiter vorzugsweise, daß die Spindelmutter (28) des Spindel-Spindelmuttergetriebes am Montagerahmen (23) angeordnet ist, weiter vorzugsweise, daß ein Ende der Spindel (27) des Spindel-Spindelmuttergetriebes starr am Querschlitten (14) befestigt ist.

12. Mehrspindeldrehmaschine nach einem der vorhergehenden Ansprüche, **dadurch gekennzeichnet, daß** am Querschlitten (14) ein Längsvorschubantrieb (29) angeordnet ist und daß der Längsvorschubantrieb (29) einen Längsvorschubantriebsmotor (29a) und ein Längsvorschubgetriebe (29b) aufweist, vorzugsweise, daß das Längsvorschubgetriebe (29b) als Spindel-Spindelmuttergetriebe ausgestaltet ist.

13. Mehrspindeldrehmaschine nach einem der vorhergehenden Ansprüche, **dadurch gekennzeichnet, daß** der Längsschlitten (16) jedenfalls im Bereich seines Eingriffs mit der Längsführung (15) im Querschnitt kreisförmig ausgestaltet ist und **dadurch** in der Längsführung (15) um eine parallel zur Z-Richtung ausgerichtete Schwenkachse (32) schwenkbar ist.

14. Mehrspindeldrehmaschine nach einem der vorhergehenden Ansprüche, **dadurch gekennzeichnet, daß** ein mit dem Längsschlitten (16) gekoppelter Stützschlitten (33) vorgesehen ist, der an einer am Querschlitten (14) angeordneten Stützschlittenführung (35) geführt ist, daß die Stützschlittenfiihrung (35) parallel zur Z-Richtung ausgerichtet ist und radial zur Schwenkachse (32) des Längsschlittens (16) versetzt angeordnet ist, vorzugsweise, daß der Stützschlitten (33) über eine Mitnehmeranordnung (37) derart mit dem Längsschlitten (16) gekoppelt ist, daß Stützschlitten (33) und Längsschlitten (16) in Z-Richtung bei gleichzeitiger Verschwenkbarkeit des Längsschlittens (16) bewegungsgekoppelt sind, weiter vorzugsweise, daß der Stützschlitten (33) die Spindelmutter (31) des Längsvorschubgetriebes (29b) trägt.

15. Mehrspindeldrehmaschine nach Anspruch 13 oder 14, **dadurch gekennzeichnet, daß** zwischen den Stützschlitten (33) und den Längsschlitten (16) ein Schwenkantrieb (38) geschaltet ist, der ein motorisches Verschwenken des Längsschlittens (16) um seine Schwenkachse (32) erlaubt, vorzugsweise, daß eine Bremse (39) zur Fixierung der jeweils motorisch angefahrenen Schwenkstellung des Längsschlittens (16) vorgesehen ist.

16. Mehrspindeldrehmaschine nach Anspruch 15, **dadurch gekennzeichnet, daß** der Schwenkantrieb (38) das motorische Verschwenken des Längsschlittens (16) in eine vorbestimmte Anzahl von Endstellungen, vorzugsweise in zwei Endstellungen erlaubt, vorzugsweise, daß der Schwenkantrieb (38) einen ungeregelten Hydraulikantrieb aufweist.

17. Mehrspindeldrehmaschine nach Anspruch 15, **dadurch gekennzeichnet, daß** der Schwenkantrieb (38) das motorische Verschwenken des Längsschlittens (16) in beliebige Endstellungen erlaubt, vorzugsweise, daß der Schwenkantrieb (38) als Torquemotor ausgestaltet ist.

18. Mehrspindeldrehmaschine nach Anspruch 14, **dadurch gekennzeichnet, daß** die Kopplung zwischen dem Stützschlitten (33) und dem Längsschlitten (16) als Klemmung ausgestaltet ist, die den Längsschlitten (16) hinsichtlich einer Schwenkbewegung um seine Schwenkachse (32) festsetzt.

19. Mehrspindeldrehmaschine nach einem der vorhergehenden Ansprüche, **dadurch gekennzeichnet, daß** der Längsschlitten (16) einen Hohlraum (41) aufweist, vorzugsweise, daß sich der Hohlraum (41) über die gesamte Länge des Längsschlittens (16) erstreckt, weiter vorzugsweise, daß der Längsschlitten (16) nach Art einer Pinole ausgestaltet ist.

20. Mehrspindeldrehmaschine nach Anspruch 19, **dadurch gekennzeichnet, daß** durch den Hohlraum (41) des Längsschlittens (16) Versorgungsleitungen für Betriebsstoffe, beispielsweise Kühlschmierstoff, Schmiermittel, o. dgl. und/oder Versorgungsleitungen für Hydraulik, Pneumatik oder Elektrik geführt sind.

21. Mehrspindeldrehmaschine nach einem der vorhergehenden Ansprüche, **dadurch gekennzeichnet, daß** im Längsschlitten (16) über seine gesamte Länge zumindest ein Kanal (42) vorgesehen ist, der bzw. die jeweils als Versorgungsleitung für Betriebsstoffe, beispielsweise Kühlschmierstoff, Schmiermittel, o. dgl. und/oder als Versorgungsleitung für Hydraulik oder Pneumatik und/oder als Durchführung für elektrische Versorgungsleitungen dient bzw. dienen, vorzugsweise, daß der Längsschlitten (16) nach Art einer Pinole ausgestaltet ist und daß der Kanal (42) bzw. die Kanäle (42) in der Wand der Pinole angeordnet ist bzw. sind.

22. Mehrspindeldrehmaschine nach einem der Ansprüche 19 bis 21, **dadurch gekennzeichnet, daß** der Längsschlitten (16) in seinem Hohlraum (41) einen Antriebsmotor (44) für den Antrieb eines Werkzeugs (45) der Werkzeugeinheit (11) aufweist, vorzugsweise, daß die Antriebswelle (46) des Antriebsmotors (44) parallel zur Z-Richtung ausgerichtet ist.

23. Mehrspindeldrehmaschine nach einem der vorhergehenden Ansprüche, **dadurch gekennzeichnet, daß** die Längsführung (15) und der Längsschlitten (16) starr miteinander gekoppelt sind und einen Längsausleger bilden, an dem die Werkzeugeinheit (11) angeordnet ist, vorzugsweise, daß der Längsausleger im wesentlichen einstückig ausgebildet ist.

## Claims

1. Multispindle lathe, with a spindle drum (4) which is arranged on a headstock (2) and is intended for accommodating a plurality of workpiece spindles (6) oriented parallel to the spindle drum axis (5), and with at least one machining unit (7) for the machining of workpieces (8), which are clamped in the workpiece spindles (6), in a working space (9), wherein the machining unit (7) is equipped with a preferably exchangeable tool unit (11), and wherein, in order to guide the tool unit (11), the machining unit (7) has a transverse slide (14) guided in the X direction - perpendicular to the respective spindle axis (13) - on a transverse guide (12), and a longitudinal slide (16) guided in the z direction - parallel to the spindle axes (13) - on a longitudinal guide (15), **characterized in that** the tool unit (11) of the machining unit (7) is arranged on the longitudinal slide (16) of the machining unit (7), **in that** the longitudinal guide (15) of the machining unit (7) is arranged on the transverse slide (14) of the machining unit (7), and **in that** the transverse guide (12) of the machining unit (7) is located completely outside the working space (9).

2. Multispindle lathe according to Claim 1, **characterized in that** the transverse slide (14) of the machining unit (7) is located completely outside the working space (9), and/or **in that** the longitudinal guide (15) of the machining unit (7) is located completely outside the working space (9).

3. Multispindle lathe according to Claim 1 or 2, **characterized in that** the spindle drum (4) protrudes through the headstock wall (17) into the working space (9), and **in that** the transverse guide (12) and/or the transverse slide (14) and/or the longitudinal guide (15) preferably lie or lies, as seen from the working space (9), completely behind the front side (18) of the headstock wall (17), which side faces the working space (9).

4. Multispindle lathe according to one of the preceding claims, **characterized in that** the longitudinal slide (16) protrudes through the headstock wall (17) into the working space (9), preferably **in that** the longitudinal slide (16) is enclosed in a sealing manner by a covering plate (20), preferably towards the headstock wall (17), and furthermore preferably **in that** the covering plate (20) is guided linearly on the front side (18) of the headstock wall (17), which side faces the working space (9), in such a manner that it does not obstruct the movement of the longitudinal slide (16) in the x direction.

5. Multispindle lathe according to one of the preceding claims, **characterized in that** the headstock wall (17) comprises a covering which faces the working space (9) and which is not part of the lathe frame (1).

6. Multispindle lathe according to one of the preceding claims, **characterized in that** the spindle drum (4) has an end surface (22) which faces the working space (9) and lies in a drum plane, and **in that** the transverse guide (12) and/or the transverse slide (14) and/or the longitudinal guide (15) preferably lie or lies, as seen from the working space (9), completely behind the drum plane.

7. Multispindle lathe according to one of the preceding claims, **characterized in that** the machining unit (7) can be fitted on the headstock (2) from that side of the headstock (2) which faces away from the working space (9).

8. Multispindle lathe according to one of the preceding claims, **characterized in that** the transverse guide (12) is arranged on an assembly frame (23), and **in that**, in the fitted state, the assembly frame (23) is fastened to the headstock (2), and preferably **in that** the machining unit (7) is fastened to the headstock (2) exclusively via the assembly frame (23).

9. Multispindle lathe according to Claim 8, **characterized in that** the assembly frame (23) has two limbs (24) running parallel to the X direction, and **in that** the transverse guide (12) has a respective guide rail on the two limbs (24) of the assembly frame (23).

10. Multispindle lathe according to Claim 8 or 9, **characterized in that** the longitudinal slide (16) and preferably also the longitudinal guide (15) run through the assembly frame (23).

11. Multispindle lathe according to one of the preceding claims, **characterized in that** a crossfeed drive (26) is provided with a crossfeed driving motor (26a) and a crossfeed gear mechanism (26b), preferably **in that** the crossfeed gear mechanism (26b) is a spindle and spindle nut gear mechanism, furthermore preferably **in that** the spindle nut (28) of the spindle and spindle nut gear mechanism is arranged on the assembly frame (23), and furthermore preferably **in that** one end of the spindle (27) of the spindle and spindle nut gear mechanism is fastened rigidly to the transverse slide (14).

12. Multispindle lathe according to one of the preceding claims, **characterized in that** a longitudinal feed drive (29) is arranged on the transverse slide (14), and **in that** the longitudinal feed drive (29) has a longitudinal feed driving motor (29a) and a longitudinal feed gear mechanism (29b), and preferably **in that** the longitudinal feed gear mechanism (29b) is configured as a spindle and spindle nut gear mechanism.

13. Multispindle lathe according to one of the preceding claims, **characterized in that** the longitudinal slide (16) is of circular configuration in cross section at least in the region of its engagement with the longitudinal guide (15) and, as a result, can be pivoted in the longitudinal guide (15) about a pivot axis (32) oriented parallel to the z direction.

14. Multispindle lathe according to one of the preceding claims, **characterized in that** a supporting slide (33) is provided, said supporting side being coupled to the longitudinal slide (16) and being guided on a supporting slide guide (35) arranged on the transverse slide (14), **in that** the supporting slide guide (35) is oriented parallel to the z direction and is arranged offset radially with respect to the pivot axis (32) of the longitudinal slide (16), preferably **in that** the supporting slide (33) is coupled to the longitudinal slide (16) via a driver arrangement (37) in such a manner that the supporting slide (33) and longitudinal slide (16) are coupled in terms of movement in the z direction with the longitudinal slide (16) being simultaneously pivotable, and furthermore preferably **in that** the supporting slide (33) bears the spindle nut (31) of the longitudinal feed gear mechanism (29b).

15. Multispindle lathe according to Claim 13 or 14, **characterized in that** a pivoting drive (38) is connected between the supporting slide (33) and the longitudinal slide (16), said pivoting drive permitting motorized pivoting of the longitudinal slide (16) about its pivot axis (32), and preferably **in that** a brake (39) is provided for fixing the pivoted position of the longitudinal slide (16), said pivoted position having been moved to in each case by motor.

16. Multispindle lathe according to Claim 15, **characterized in that** the pivoting drive (38) permits the motorized pivoting of the longitudinal slide (16) into a predetermined number of final positions, preferably into two final positions, and preferably **in that** the pivoting drive (38) has an unregulated hydraulic drive.

17. Multispindle lathe according to Claim 15, **characterized in that** the pivoting drive (38) permits the motorized pivoting of the longitudinal slide (16) into any final positions, and preferably **in that** the pivoting drive (38) is designed as a torque motor.

18. Multispindle lathe according to Claim 14, **characterized in that** the coupling between the supporting slide (33) and the longitudinal slide (16) is designed as a clamping action which fixes the longitudinal slide (16) in respect of a pivoting movement about its pivot axis (32).

19. Multispindle lathe according to one of the preceding claims, **characterized in that** the longitudinal slide (16) has a hollow space (41), preferably **in that** the hollow space (41) extends over the entire length of the longitudinal slide (16), and furthermore preferably **in that** the longitudinal slide (16) is designed in the manner of a sleeve.

20. Multispindle lathe according to Claim 19, **characterized in that** supply lines for operating substances, for example cooling lubricant, lubricating agent or the like and/or supply lines for hydraulics, pneumatics or electrics are guided through the hollow space (41) of the longitudinal slide (16).

21. Multispindle lathe according to one of the preceding claims, **characterized in that** at least one channel (42) is provided in the longitudinal slide (16) over the entire length thereof, said channel or channels serving in each case as a supply line for operating substances, for example cooling lubricant, lubricating agent or the like and/or as a supply line for hydraulics or pneumatics and/or as a leadthrough for electric supply lines, preferably **in that** the longitudinal slide (16) is designed in the manner of a sleeve, and **in that** the channel (42) or the channels (42) is or are arranged in the wall of the sleeve.

22. Multispindle lathe according to one of Claims 19 to 21, **characterized in that** the longitudinal slide (16) has, in its hollow space (41), a driving motor (44) for driving a tool (45) of the tool unit (11), and preferably **in that** the drive shaft (46) of the driving motor (44) is oriented parallel to the Z direction.

23. Multispindle lathe according to one of the preceding claims, **characterized in that** the longitudinal guide (15) and the longitudinal slide (16) are coupled rigidly to each other and form a longitudinal extension arm on which the tool unit (11) is arranged, and preferably **in that** the longitudinal extension arm is essentially of single-piece design.

## Revendications

1. Tour multibroche avec un tambour porte-broches (4) disposé sur une poupée fixe (2) pour recevoir plusieurs broches porte-pièce (6) orientées parallèlement à l'axe (5) du tambour porte-broches et avec au moins une unité de travail (7) pour l'usinage de pièces (8) serrées dans les broches porte-pièce (6) dans une chambre de travail (9), dans lequel l'unité de travail (7) est équipée d'une unité porte-outils (11) de préférence échangeable, dans lequel l'unité de travail (7) présente, pour le guidage de l'unité porte-outils (11), un chariot transversal (14) guidé sur un guidage transversal (12) dans la direction x - perpendiculairement à l'axe de broche respectif (13) - et un chariot longitudinal (16) guidé sur un guidage longitudinal (15) dans la direction Z - parallèlement aux axes de broches (13), **caractérisé en ce que** l'unité porte-outils (11) de l'unité de travail (7) est disposée sur le chariot longitudinal (16) de l'unité de travail (7), **en ce que** le guidage longitudinal (15) de l'unité de travail (7) est disposé sur le chariot transversal (14) de l'unité de travail (7) et **en ce que** le guidage transversal (12) de l'unité de travail (7) est situé entièrement à l'extérieur de la chambre de travail (9).

2. Tour multibroche selon la revendication 1, **caractérisé en ce que** le chariot transversal (14) de l'unité de travail (7) est situé entièrement à l'extérieur de la chambre de travail (9), et/ou **en ce que** le guidage longitudinal (15) de l'unité de travail (7) est situé entièrement à l'extérieur de la chambre de travail (9).

3. Tour multibroche selon la revendication 1 ou 2, **caractérisé en ce que** le tambour porte-broches (4) pénètre dans la chambre de travail (9) à travers la paroi (17) de la poupée fixe et **en ce que** le guidage transversal (12) et/ou le chariot transversal (14) et/ou le guidage longitudinal (15), vus de la chambre de travail (9), est/sont situé(s) entièrement derrière la face avant (18), tournée vers le chambre de travail (9), de la paroi (17) de la poupée fixe.

4. Tour multibroche selon l'une quelconque des revendications précédentes, **caractérisé en ce que** le chariot longitudinal (16) pénètre dans la chambre de travail (9) à travers la paroi (17) de la poupée fixe, de préférence **en ce que** le chariot longitudinal (16) est entouré par une plaque de masquage (20), de préférence hermétiquement par rapport à la paroi (17) de la poupée fixe, de préférence encore **en ce que** la plaque de masquage (20) est menée linéairement sur la face avant (18), tournée vers la chambre de travail (9), de la paroi (17) de la poupée fixe, de telle manière qu'elle ne gêne pas le mouvement du chariot longitudinal (16) dans la direction X.

5. Tour multibroche selon l'une quelconque des revendications précédentes, **caractérisé en ce que** la paroi (17) de la poupée fixe comprend un couvercle tourné vers la chambre de travail (9), qui ne fait pas partie du bâti de la machine (1).

6. Tour multibroche selon l'une quelconque des revendications précédentes, **caractérisé en ce que** le tambour porte-broches (4) présente une face frontale (22) située dans un plan du tambour et tournée vers la chambre de travail (9) et **en ce que** le guidage transversal (12) et/ou le chariot transversal (14) et/ou le guidage longitudinal (15), vus de la chambre de travail (9), est/sont situé(s) de préférence entièrement derrière le plan du tambour.

7. Tour multibroche selon l'une quelconque des revendications précédentes, **caractérisé en ce que** l'unité de travail (7) peut être montée sur la poupée fixe (2) sur la face de la poupée fixe (2) située à l'opposé de la chambre de travail (9).

8. Tour multibroche selon l'une quelconque des revendications précédentes, **caractérisé en ce que** le guidage transversal (12) est disposé sur un cadre de montage (23) et **en ce que** le cadre de montage (23) est fixé en position montée sur la poupée fixe (2), de préférence **en ce que** l'unité de travail (7) est fixée à la poupée fixe (2) exclusivement au moyen du cadre de montage (23).

9. Tour multibroche selon la revendication 8, **caractérisé en ce que** le cadre de montage (23) présente deux branches (24) orientées parallèlement à la direction X et **en ce que** le guidage transversal (12) présente chaque fois un rail de guidage sur les deux branches (24) du cadre de montage (23).

10. Tour multibroche selon la revendication 8 ou 9, **caractérisé en ce que** le chariot longitudinal (16) et de préférence aussi le guidage longitudinal (15) s'étendent à travers le cadre de montage (23).

11. Tour multibroche selon l'une quelconque des revendications précédentes, **caractérisé en ce qu'**il est prévu un entraînement d'avance transversale (26) avec un moteur d'entraînement d'avance transversale (26a) et une transmission d'avance transversale (26b), de préférence **en ce que** la transmission d'avance transversale (26b) présente une transmission à broche et écrou de broche, de préférence encore **en ce que** l'écrou de broche (28) de la transmission à broche et écrou de broche est disposé sur le cadre de montage (23), et de préférence encore **en ce qu'**une extrémité de la broche (27) de la transmission à broche et écrou de broche est fixée rigidement au chariot transversal (14).

12. Tour multibroche selon l'une quelconque des revendications précédentes, **caractérisé en ce qu'**un entraînement d'avance longitudinale (29) est disposé sur le chariot transversal (14) et **en ce que** l'entraînement d'avance longitudinale (29) présente un moteur d'entraînement d'avance longitudinale (29a) et une transmission d'avance longitudinale (29b), de préférence **en ce que** la transmission d'entraînement d'avance longitudinale (29b) est réalisée sous la forme d'une transmission à broche et écrou de broche.

13. Tour multibroche selon l'une quelconque des revendications précédentes, **caractérisé en ce que** le chariot longitudinal (16) a dans tous les cas une section transversale circulaire dans la région de son engagement avec le guidage longitudinal (15) et peut ainsi pivoter dans le guidage longitudinal (15) autour d'un axe de pivotement (32) orienté parallèlement à la direction z.

14. Tour multibroche selon l'une quelconque des revendications précédentes, **caractérisé en ce qu'**il est prévu un chariot de soutien (33) couplé au chariot longitudinal (16), qui est guidé sur un guidage de chariot de soutien (35) disposé sur le chariot transversal (14), **en ce que** le guidage de chariot de soutien (35) est orienté parallèlement à la direction Z et est disposé avec un décalage radial par rapport à l'axe de pivotement (32) du chariot longitudinal (16), de préférence **en ce que** le chariot de soutien (33) est couplé au chariot longitudinal (16) au moyen d'un dispositif d'entraînement (37) de telle manière que le chariot de soutien (33) et le chariot longitudinal (16) soient couplés en mouvement dans la direction z avec en même temps une possibilité de pivotement du chariot longitudinal (16), de préférence encore **en ce que** le chariot de soutien (33) porte l'écrou de broche (31) de la transmission d'avance longitudinale (29b).

15. Tour multibroche selon la revendication 13 ou 14, **caractérisé en ce qu'**il se trouve entre le chariot de soutien (33) et le chariot longitudinal (16) un entraînement de pivotement (38), qui permet un pivotement motorisé du chariot longitudinal (16) autour de son axe de pivotement (32), de préférence **en ce qu'**il est prévu un frein (39) pour fixer la position de pivotement du chariot longitudinal (16), atteinte chaque fois au moyen du moteur.

16. Tour multibroche selon la revendication 15, **caractérisé en ce que** l'entraînement de pivotement (38) permet le pivotement motorisé du chariot longitudinal (16) dans un nombre prédéterminé de positions finales, de préférence dans deux positions finales, de préférence **en ce que** l'entraînement de pivotement (38) présente un entraînement hydraulique non régulé.

17. Tour multibroche selon la revendication 15, **caractérisé en ce que** l'entraînement de pivotement (38) permet le pivotement motorisé du chariot longitudinal (16) dans des positions finales quelconques, de préférence **en ce que** l'entraînement de pivotement (38) est réalisé sous la forme d'un moteur vireur.

18. Tour multibroche selon la revendication 14, **caractérisé en ce que** le couplage entre le chariot de soutien (33) et le chariot longitudinal (16) est réalisé par un serrage, qui immobilise le chariot longitudinal (16) par rapport à un mouvement de pivotement autour de son axe de pivotement (32).

19. Tour multibroche selon l'une quelconque des revendications précédentes, **caractérisé en ce que** le chariot longitudinal (16) présente une cavité (41), de préférence **en ce que** la cavité (41) s'étend sur toute la longueur du chariot longitudinal (16), de préférence encore **en ce que** le chariot longitudinal (16) est réalisé à la manière d'un canon de contrepoupée.

20. Tour multibroche selon la revendication 19, **caractérisé en ce que** des conduites d'alimentation pour les fluides de travail, par exemple le lubrifiant de refroidissement, les agents lubrifiants, ou analogues et/ou des conduites d'alimentation pour les systèmes hydrauliques, pneumatiques ou électriques, sont menées à travers la cavité (41) du chariot longitudinal (16).

21. Tour multibroche selon l'une quelconque des revendications précédentes, **caractérisé en ce qu'**il est prévu dans le chariot longitudinal (16), sur toute sa longueur, au moins un canal (42) qui sert respectivement de conduite d'alimentation pour des fluides de travail, par exemple le lubrifiant de refroidissement, les agents lubrifiants, ou analogues, et/ou de conduite d'alimentation pour les systèmes hydrauliques ou pneumatiques et/ou de traversée pour des canalisations d'alimentation électrique, de préférence **en ce que** le chariot longitudinal (16) est réalisé à la manière d'un canon de contrepoupée et **en ce que** le canal (42) ou les canaux (42) est/sont disposé(s) dans la paroi du canon de contrepoupée.

22. Tour multibroche selon l'une quelconque des revendications 19 à 21, **caractérisé en ce que** le chariot longitudinal (16) présente dans sa cavité (41) un moteur d'entraînement (44) pour l'entraînement d'un outil (45) de l'unité porte-outils (11), de préférence **en ce que** l'arbre d'entraînement (46) du moteur d'entraînement (44) est orienté parallèlement à la direction z.

23. Tour multibroche selon l'une quelconque des revendications précédentes, **caractérisé en ce que** le guidage longitudinal (15) et le chariot longitudinal (16) sont couplés rigidement l'un à l'autre et forment une flèche longitudinale, sur laquelle l'unité porte-outils (11) est disposée, de préférence **en ce que** la flèche longitudinale est réalisée essentiellement en une seule pièce.
